# EUROPEAN PATENT SPECIFICATION

(11) **EP 1 580 512 B1**
(45) Date of publication and mention of the grant of the patent: **07.03.2007**
(21) Application number: 04425206.2
(22) Date of filing: 24.03.2004
(51) Int. Cl.: F28D 20/02

(54) **Heating device having a shape memory actuactor**
Heizvorrichtung mit Betätigungsvorrichtung aus Formgedächtnismaterial
Appareil de chauffage comprenant un dispositif d'actionnement à mémoire de forme

(43) Date of publication of application: 28.09.2005
(73) Proprietor: C.R.F. SOCIETA' CONSORTILE PER AZIONI, 10043 Orbassano (Torino) (IT)
(72) Inventor: Pidria, Marco Federico, 10043 Orbassano (Torino) (IT); Asti, Massimo, 10043 Orbassano (Torino) (IT); Alacqua, Stefano, 10090 Rivoli Cascine Vica (Torino) (IT); Butera, Francesco, 10100 Torino (IT)
(74) Representative: Notaro, Giancarlo

(56) References cited:
- EP-A- 0 350 460
- GB-A- 2 260 193
- US-A- 4 850 424
- PATENT ABSTRACTS OF JAPAN vol. 014, no. 43 (C-0681) [3986], 26 January 1990 (1990-01-26) -& JP 01 274838 A (NOK CORP), 2 November 1989 (1989-11-02)
- PATENT ABSTRACTS OF JAPAN vol. 014, no. 131 (C-0700), 13 March 1990 (1990-03-13) -& JP 02 005909 A (NOK CORP), 10 January 1990 (1990-01-10)
- PATENT ABSTRACTS OF JAPAN vol. 014, no. 432 (M-1026) [4375], 17 September 1990 (1990-09-17) -& JP 02 171594 A (MITSUBISHI ELECTRIC CORP), 3 July 1990 (1990-07-03)
- PATENT ABSTRACTS OF JAPAN vol. 2002, no. 05, 3 May 2002 (2002-05-03) -& JP 2002 013893 A (YAMAGUCHI MICHIKO; FINETEC KENKYUSHO:KK), 18 January 2002 (2002-01-18)
- PATENT ABSTRACTS OF JAPAN vol. 012, no. 384 (M-753) [3231], 13 October 1988 (1988-10-13) -& JP 63 135789 A (NOK CORP), 8 June 1988 (1988-06-08)
- PATENT ABSTRACTS OF JAPAN vol. 1997, no. 03, 31 March 1997 (1997-03-31) -& JP 08 310562 A (DAISEN SANGYO KK; MITSUBISHI KAGAKU B C L:KK), 26 November 1996 (1996-11-26)
- PATENT ABSTRACTS OF JAPAN vol. 009, no. 80 (M-370), 10 April 1985 (1985-04-10) -& JP 59 208393 A (SANDEN KK), 26 November 1984 (1984-11-26)
- PATENT ABSTRACTS OF JAPAN vol. 009, no. 179 (M-399), 24 July 1985 (1985-07-24) -& JP 60 048492 A (HITACHI SEISAKUSHO KK), 16 March 1985 (1985-03-16)

## Description

The present invention relates to heating devices of the type comprising a container containing one or more chemical compounds for releasing heat following upon a change of phase thereof (crystallization, solidification, ...) and a deformable element to trigger the same change of phase, placed inside the container.

The use of materials capable of storing heat and to release it during crystallization has been known for a long time. For example, the use of a solution of sodium acetate for such a purpose is already illustrated in the English patent GB-A-O 167 373, going back to 1920. Such materials are for example illustrated and used to make thermal "pads", for example for medical use. Such devices exploit the latent heat of the fusion which is released during the transition of a solution from the liquid phase to the solid phase (see for example US-A-4 451 383). Devices of the type above specified are also known in which the priming of the crystallization of the solution is obtained through the deformation of a metal plate or membrane which is in contact with the solution (see for example FR-A-2 753 896). In such a case, the deformation of the trigger element of the crystallization is obtained manually. Following such deformation a first germ of crystallization is generated, permitting afterwards the extension of the phenomenon to the entire solution, with consquent immediate release of the accumulated latent heat.

A heating device as set forth in the preamble of claim 1 is known from JP 01 274838, JP 02 005909 AND JP 02 171594. A heating device where the release of heat from supercooled material is triggered by a shape memory actuator is also known from US 4 850 424.

The aim of the present patent is that of improving the devices of the type above illustrated in order to allow their application in various fields where a remote control of the trigger element of the change of the phase could be useful.

A further aim of the invention is that of providing such a device with extremely simple and efficient means, that will not require a high consumption of energy .

With the view to obtain these and further aims and advantages the invention has as its object a heating device having the characteristics of claim 1.

The shape memory actuators are themselves known and applied in various technical fields. They exploit the proprieties of particular metallic alloys to change the state above and below a determined transition temperature. A typical example is that of a shape memory wire which takes a shorter configuration when the temperature goes above a predetermined transition value. On the other hand shape memory actuators are known having a completely different configuration, for example in the form of coil springs, of torsion bars or other. The applicant holds several patents relative to specific conformations of shape memory actuators and also to specific applications of said actuators. In the solutions up to now proposed, the heating of the shape memory actuator can be obtained either by exploiting directly the ambient temperatures in which the shape memory element is placed, or, in other cases, provoking the heating of the shape memory element by the Joule effect by passing through it an electric current.

The present invention consists essentially of a new and advantageous application of a shape memory actuator for the control of the trigger element of the change of the phase in a heating device of the type mentioned above.

Naturally, the conformation and the disposition of the shape memory element can be selected having regard to the needs of each specific application, having particular regard to the necessity to reduce to the minimum the actuation time, and also the time that the shape memory element takes to return to the original condition after the actuation, and/or to obtain a high ratio power/weight of the shape memory element. A further advantage of the shape memory elements is that of presenting a high resistance to corrosion, and therefore it can be immersed in the chemical compound without problems.

Among the various possible applications of the heating device, according to the invention, that of heating the fuel of a diesel engine is particularly interesting. Particularly during a cold start, it is generally necessary to heat the diesel fed to a diesel engine, in order to dissolve the paraffin waxes contained in the fuel on the walls of the ducts which supply the fuel to the engine.

Naturally, the heating device according to the invention is applicable in many other fields. For example, it could be exploited to heat the conditioned air fed into the inside of a vehicle. In an other example, it could be used to heat the cooling liquid of the engine in conditions of low temperature.

Further characteristics and advantages of the invention will result in the description which follows with reference to the enclosed drawings, supplied purely as a non limitative example, in which:
figure 1 is a schematic view of a heating device according to the invention, which shows the operating principle of the device, and
figures 2, 3, 4 show 3 possible variations of the device.

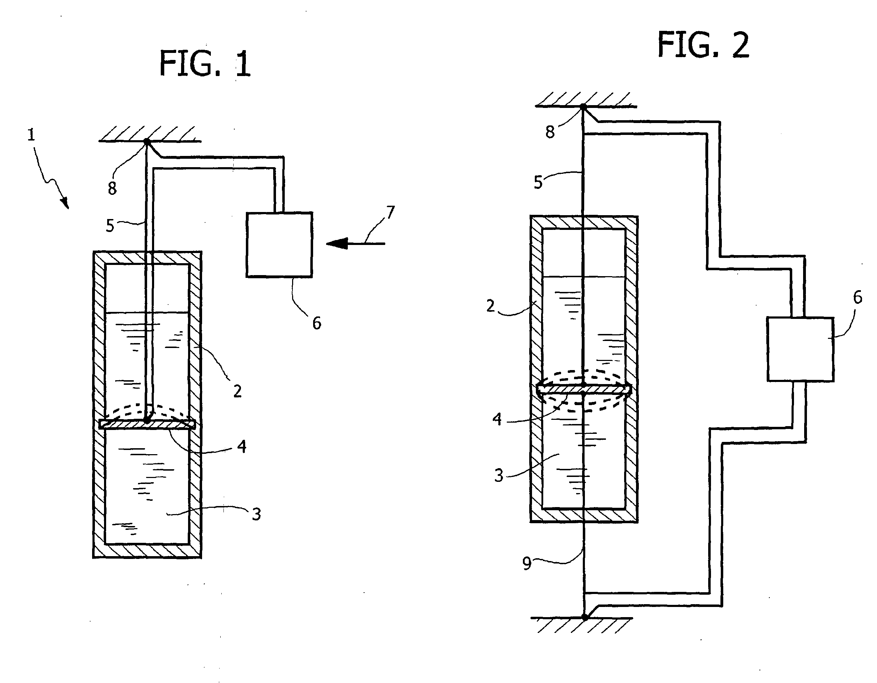

In figure 1, with reference number 1 a heating device is shown in the whole realized in conformity to the principles of the invention. The device 1 is comprised of a container 2 containing one or more chemical compounds 3 for example a solution of sodium acetate, capable of releasing heat in consequence of its crystallization. The priming of the crystallization is obtained provoking the deformation of a metallic disc 4 immersed in the solution 3, with the peripheral edge secured to the wall of the container 2 and that, in the illustrated example, is placed with its plane perpendicularly to the longitudinal axis of the container 2.

It is evident that the shape, the dimensions, and the material of the container 2 could be different.

The disc 4 to prime the change of the phase of the chemical compound 3 could be deformed until it reaches the configuration shown with the dotted line through a shape memory wire 5 which is activated through an electronic control unit 6 which supplies an electric current through the wire 5. To such aim, the opposite ends of the wire 5 are connected, in some way, to the power unit 6.

When the shape memory wire 5 is activated by the unit 6, the wire 5 is heating up and, when this goes above the transition temperature, it shortens determining the deformation of the metallic disc 4, because the end of the wire 5 opposite to the disc 4 is secured in 8 to a fixed structure. The ends of the shape memory wire could both be tied in 8 to a fixed structure. In this case the shape memory wire passes through holes in the metallic disc 4, and the wire is sent back in a U through such holes, in such a way to have a coming and going system, the shortening of which determines in the same way the deformation of the metallic disc 4.

Conforming to a phenomenon in itself known, the deformation of the plate 4 triggers the priming of the change of the phase of the chemical compound 3 so that it releases heat immediately. An essential advantage of the invention rests with the very short time it takes to release the heat. Such advantage is added to the possibility to obtain an activation time of the shape memory wire 5 also extremely short, in the order of 100 ms. Also the waiting time for the wire 5 to go back to its initial condition after the activation is relatively short, in the order of a second. The use of the shape memory wire gives the possibility to obtain a high ratio power/weight with the consequent capacity to exercise the necessary force to activate the trigger for the change of the phase using a device of small dimensions. The shape memory wire is characterized also by the high resistance to corrosion, so that it can remain immersed in the chemical compound 3 without negative consequences.

Figure 2 refers to a variation of figure 1, in which are foreseen two shape memory wires 5, 9 connected to the opposite sides of the metallic disc 4 in order to deform the disc 4 respectively towards the top (with reference to figure 2), or towards the bottom. The power unit 6 could be predisposed to supply alternatively electric current to the wires 5, 9, so that the disc 4 is deformed alternatively in the two opposite directions.

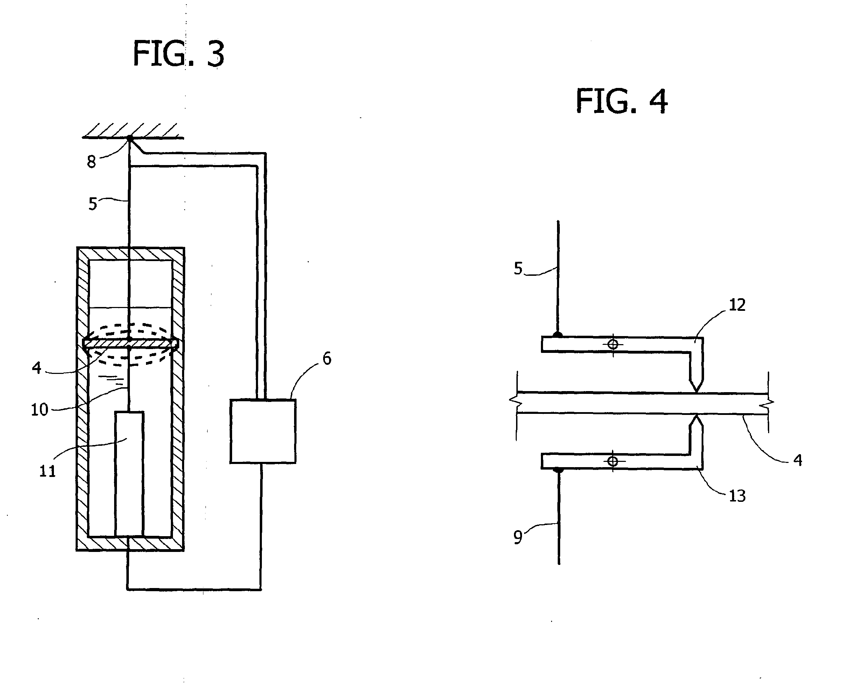

Figure 3 shows yet again another variation, in which the disc 4 is connected from one side to the shape memory wire 5 which becomes activated through a supply of electric current, and from the other side to a shape memory wire 10 the activation of which is not obtained by passing electric current through it, but rather by the heat generated by an electric resistance 11 which is connected to the end of the wire 10 opposite to the disc 4.

Figure 4 shows a variation substantially similar to that one of figure 2 where however the two shape memory wires 5, 9 are not connected directly to disc 4, but rather to the two rocker levers 12, 13 which cause the deformation of the disc.

Naturally, keeping firm the principle of the invention, the particulars of the construction and the forms of realization could extensively change in regard to what has been described and illustrated only as an example, without leaving from the present invention.

## Claims

1. Heating device (1), comprising:
- a container (2), containing one or more chemical compounds (3) for releasing heat following a change of phase thereof,
a deformable trigger element (4) to trigger this change of phase, placed inside the container, and
a shape memory actuator (5) to operate the deformable trigger element (4),
**characterized in that** said deformable trigger element (4) has its peripheral edge secured to the wall of the container (2), and **in that** said shape memory actuator is made of a shape memory straight wire (5) having one end (8) connected to a fixed structure located outside the container (2) and another portion connected to the deformable trigger element (4) located inside the container,
said device further comprising an electronic control unit (6) to supply an electric current to the shape memory wire (5) with the aim to heat it above its transition temperature so to cause its shortening, thus causing a deformation of the deformable trigger element (4), triggering release of heat by said compounds.

2. Heating device according to claim 1, **characterized in that** said another portion of the shape memory wire (5) is its end opposite to said one end.

3. Heating device according to claim 1, **characterized in that** both ends of the shape memory wire (5) are connected to the fixed structure and the deformable trigger element (4) is in form of a metallic disc having holes trough which the shape memory wire (5) goes in a U arrangement.

4. Heating device according to claim 1, **characterized in that** said device includes a second shape memory wire (9) connected to said deformable trigger element (4) from a side opposed to the one that connects the first shape memory wire (5), said electronic control unit (6) being suitable to supply electric current alternatively to the first and second shape memory wires (5, 9).

5. Heating device according to claim 1, **characterized in that** said device includes a second shape memory wire (10) connected to the deformable trigger element (4) from a side opposed from the one to which is connected the first shape memory wire (5), such device includes also an electric resistance (11) which can be supplied with electric current with the aim to heat the said second shape memory wire (10).

6. Heating device according to claim 1, **characterized in that** said shape memory wire (5) is connected to the deformable trigger element (4) through an intermediate element (12) apt to provoke the deformation of said deformable trigger element (4).

7. Heating device according to claim 6, **characterized in that** said device includes two shape memory wires (5, 9) placed on opposite sides in regard to the said deformable trigger element and connected to respective rocker levers (12, 13) capable of provoking deformations in opposite directions of the said trigger element (4).

8. Use of a heating device according to any of the preceding claims for heating fuel fed to a diesel engine.

## Patentansprüche

1. Heizvorrichtung (1) umfassend:
einen Behälter (2), enthaltend ein oder mehrere chemische Verbindungen (3), um Wärme aufgrund einer Phasenänderung dieser freizusetzen,
ein deformierbares Auslöserelement (4), um diese Phasenänderung auszulösen, welches in dem Behälter angeordnet ist, und
einen Formgedächtnis-Aktuator (5), um das deformierbare Auslöserelement (4) zu betätigen,
**dadurch gekennzeichnet, dass** das deformierbare Auslöserelement mit seiner Umfangskante an der Wand des Behälters (2) gesichert ist, und dass der Formgedächtnis-Aktuator aus einem geraden Formgedächtnisdraht (5) hergestellt ist, wobei ein Ende (8) an einer festen Struktur befestigt ist, die außerhalb des Behälters (2) angeordnet ist und ein anderer Bereich an dem deformierbaren Auslöserelement (4) befestigt ist, der innerhalb des Behälters angeordnet ist,
wobei die Vorrichtung des Weiteren eine elektronische Steuereinheit (6) umfasst, um dem Formgedächtnisdraht (5) einen elektrischen Strom zu zuführen, mit dem Ziel den Draht oberhalb der Umwandlungstemperatur zu erwärmen, um so dessen Verkürzung zu bewirken, so dass eine Deformierung des deformierbaren Auslöserelementes (4) bewirkt wird, wodurch die Freigabe der Wärme dieser Verbindungen ausgelöst wird.

2. Heizvorrichtung nach Anspruch 1, **dadurch gekennzeichnet, dass** dieser andere Bereich des Formgedächtnis-Drahtes (5) mit seinem Ende dem einen Ende gegenüber liegt.

3. Heizvorrichtung nach Anspruch 1, **dadurch gekennzeichnet, dass** beide Enden des Formgedächtnisdrahtes (5) mit der festen Struktur verbunden sind, und das deformierbare Auslöseelement (4) in der Form einer metallischen Scheibe ausgebildet ist, mit Löchern, durch welche sich der Formgedächtnisdraht (5) in einer U-Anordnung erstreckt.

4. Heizvorrichtung nach Anspruch 1, Heizvorrichtung die Vorrichtung einen zweiten Formgedächtnisdraht (9) umfasst, welcher mit dem deformierbaren Auslöserelement (4) verbunden ist, von einer Seite, welche der Seite gegenüberliegt, die mit dem ersten Formgedächtnisdraht (5) verbunden ist, wobei die elektronische Steuereinheit (6) geeignet ist, um abwechselnd dem ersten und zweiten Formgedächtnisdraht (5, 9) elektrischen Strom zuzuführen.

5. Heizvorrichtung nach Anspruch 1, **dadurch gekennzeichnet, dass** die Vorrichtung einen zweiten Formgedächtnisdraht (10) umfasst, welcher mit dem deformierbaren Auslöserelement (4) verbunden ist, von einer Seite, welche der Seite gegenüberliegt, die mit dem ersten Formgedächtnisdraht (5) verbunden ist, wobei die Vorrichtung einen elektrischen Widerstand (11) umfasst, welcher mit elektrischen Strom versorgt werden kann, mit dem Ziel den zweiten Formgedächtnisdraht (10) zu erwärmen.

6. Heizvorrichtung nach Anspruch 1, **dadurch gekennzeichnet, dass** der Formgedächtnisdraht (5) mit dem deformierbaren Auslöserelement (4) durch ein Zwischenelement (12) verbunden ist, welches geeignet ist, die Deformierung des deformierbaren Auslöserelementes (4) auszulösen.

7. Heizvorrichtung nach Anspruch 6, **dadurch gekennzeichnet, dass** die Einrichtung zwei Formgedächtnisdrähte (5, 9) umfasst, deren gegenüberliegenden Seiten in Bezug auf das deformierbare Auslöserelement angeordnet sind und jeweils mit Kipphebeln (12, 13) verbunden sind, welche geeignet sind, um die Deformierungen des Auslöseelementes (4) in entgegengesetzten Richtungen auszulösen.

8. Verwendung einer Heizvorrichtung gemäß einem der vorangehenden Ansprüche für die Erwärmung eines Kraftstoffes, welches einem Dieselmotor zugeführt wird.

## Revendications

1. Dispositif de chauffage (1), comprenant :
- un récipient (2) contenant un ou plusieurs composés chimiques (3) destinés à libérer de la chaleur à la suite d'une modification de phase de ceux-ci,
un élément de déclenchement déformable (4) destiné à déclencher cette modification de phase, placé à l'intérieur du récipient, et
un actionneur à mémoire de forme (5) destiné à mettre en oeuvre l'élément de déclenchement déformable (4),
**caractérisé en ce que** ledit élément de déclenchement déformable (4) a son bord périphérique fixé à la paroi du récipient (2) et **en ce que** ledit actionneur à mémoire de forme est constitué d'un fil droit à mémoire de forme (5) possédant une première extrémité (8) reliée à une structure fixe située à l'extérieur du récipient (2) et une autre partie reliée à l'élément de déclenchement déformable (4) situé à l'intérieur du récipient,
ledit dispositif comprenant en outre une unité de commande électronique (6) destinée à fournir un courant électrique au fil à mémoire de forme (5) dans le but de le chauffer au-dessus de sa température de transition de façon à provoquer son raccourcissement, ce qui provoque ainsi une déformation de l'élément de déclenchement déformable (4), en déclenchant la libération de chaleur par lesdits composés.

2. Dispositif de chauffage selon la revendication 1, **caractérisé en** en ce que ladite autre partie du fil à mémoire de forme (5) a son extrémité opposée à ladite première extrémité.

3. Dispositif de chauffage selon la revendication 1, **caractérisé en ce que** les deux extrémités du fil à mémoire de forme (5) sont reliées à la structure fixe, et **en ce que** l'élément de déclenchement déformable (4) se trouve sous la forme d'un disque métallique comportant des trous au travers desquels le fil à mémoire de forme (5) vient suivant une disposition en forme de U.

4. Dispositif de chauffage selon la revendication 1, **caractérisé en ce que** ledit dispositif inclut un second fil à mémoire de forme (9) relié au dit élément de déclenchement déformable (4) depuis un côté opposé à celui qui relie le premier fil à mémoire de forme (5), ladite unité de commande électronique (6) convenant pour fournir un courant électrique alternativement aux premier et second fils à mémoire de forme (5, 9).

5. Dispositif de chauffage selon la revendication 1, **caractérisé en ce que** ledit dispositif inclut un second fil à mémoire de forme (10) relié à l'élément de déclenchement déformable (4) depuis un côté opposé à celui sur lequel est relié le premier fil à mémoire de forme (5), un tel dispositif inclut également une résistance électrique (11) qui peut être alimentée avec du courant électrique dans le but de chauffer ledit second fil à mémoire de forme (10).

6. Dispositif de chauffage selon la revendication 1, **caractérisé en ce que** ledit fil à mémoire de forme (5) est relié à l'élément de déclenchement déformable (4) par l'intermédiaire d'un élément intermédiaire (12) apte à provoquer la déformation dudit élément de déclenchement déformable (4).

7. Dispositif de chauffage selon la revendication 6, **caractérisé en ce que** ledit dispositif inclut deux fils à mémoire de forme (5, 9) placés sur des côtés opposés par rapport à l'élément de déclenchement déformable et reliés à des leviers basculants respectifs (12, 13) capables de provoquer des déformations dudit élément de déclenchement (4) dans des sens opposés.

8. Utilisation d'un dispositif de chauffage selon l'une quelconque des revendications précédentes pour chauffer du carburant approvisionnant un moteur diesel.
